# EUROPEAN PATENT APPLICATION

(11) **EP 4 800 771 A1**
(43) Date of publication of application: **02.09.2026**
(21) Application number: 24881596.1
(22) Date of filing: 22.10.2024
(51) Int. Cl.: H01M 4/58, H01M 4/136, H01M 10/0525

(54) **POSITIVE ELECTRODE MATERIAL, AND PREPARATION METHOD THEREFOR AND USE THEREOF**

(30) Priority: 27.10.2023 CN 202311412581
(71) Applicant: Shenzhen Dynanonic Co., Ltd., Shenzhen, Guangdong 518000 (CN)
(72) Inventor: KONG, Lingyong, Shenzhen, Guangdong 518000 (CN); XU, Rongyi, Shenzhen, Guangdong 518000 (CN); FENG, Ze, Shenzhen, Guangdong 518000 (CN); LI, Yineng, Shenzhen, Guangdong 518000 (CN); TANG, Jie, Shenzhen, Guangdong 518000 (CN); WANG, Peng, Shenzhen, Guangdong 518000 (CN)
(74) Representative: Metida
(86) International application number: PCT/CN2024/126441
(87) International publication number: WO 2025/087231

(57) **Abstract**

A cathode material, a preparation method and an application thereof are provided. A general chemical formula of the cathode material is LiₐFe_{b}Mn_{c}Mₓ(PO₄)_{d}, where 0.990≤a≤1.1, 0.9≤b+c≤ 1.1, 0.95≤d≤1.1, 0.001≤x≤0.03, and 0.9≤b+c+x≤1.1. A crystal of the cathode material is able to grow preferentially along an *ac* crystal plane. A ratio of an *a*-direction size of the cathode material to a *b*-direction size of the cathode material is 0.4542 to 0.4756, and a ratio of a *c*-direction size of the cathode material to the *b*-direction size of the cathode material is 0.5869 to 0.6172. The cathode material crystal has a small size along the *b*-direction. Since the *ac* plane is perpendicular to a lithium ion migration direction, the preferential growth of the cathode material along the *ac* plane shortens a lithium ion diffusion distance and improves cycling performance of the cathode material.

## Description

This disclosure claims priority to Chinese Patent Application No. 202311412581.5, filed October 27, 2023, the entire content of which is incorporated herein by reference.

### TECHNICAL FIELD

The present disclosure relates to the field of battery technology, and particularly relates to a cathode material, a preparation method and an application thereof.

### BACKGROUND

Lithium-ion battery is a new generation of green high-energy battery and is playing an increasingly important role in various fields. A cathode material is an important component of the lithium-ion battery, which determines indicators such as energy density, service life, and safety. The cathode material occupies a core position in the lithium-ion battery. With the increasing demand for longer driving range of electric vehicles, the requirements for various performance of the cathode material are also getting higher. However, the poor cycling performance of existing cathode materials during charge process and discharge process limits the improvement of lithium-ion battery performance.

### SUMMARY

The disclosure provides a cathode material, a preparation method and an application for the cathode material.

In a first aspect, the disclosure provides a cathode material. A general chemical formula of the cathode material is LiₐFe_{b}Mn_{c}Mₓ(PO₄)_{d}, where M includes at least one element of Ti, V, Mg, Zr, Co, In, Ni, or Nb, and 0.990≤a≤1.1, 0.9≤b+c≤1.1, 0.95≤d≤1.1, 0.001≤x≤0.03, 0.9≤b+c+x ≤1.1. A crystal of the cathode material can grow preferentially along an *ac* crystal plane. A ratio of an *a*-direction size of the cathode material to a *b*-direction size of the cathode material is 0.4542 to 0.4756, and a ratio of a *c*-direction size of the cathode material to the *b*-direction size of the cathode material is 0.5869 to 0.6172.

In embodiments of the disclosure, by introducing element M into the cathode material, the cathode material can grow preferentially on a designated *ac* crystal plane, so as to shorten the size of the cathode material crystal along the *b*-direction. Since the *ac* plane is perpendicular to a lithium ion migration direction, a *bc* plane and the *b*-direction are parallel to a lithium ion transport channel. In addition, by controlling 0.001≤x≤0.03, element M is doped in an appropriate amount, which improves the cycling performance of the cathode material on the premise of ensuring that the cathode material has high electrochemical performance. In embodiments of the disclosure, by modifying the cathode material and controlling a coordination degree between doping elements and anions, the cathode material can grow preferentially along the *ac* plane, which shortens the diffusion distance of the lithium ion and facilitates lithium ion migration, thereby improving the ion transport rate and electron transport rate of the cathode material, and effectively enhancing the cycling performance of the cathode material.

In a possible implementation, a ratio of a diffraction peak area of a (020) crystal plane to a diffraction peak area of a (200) crystal plane of the cathode material is 3.011 to 3.500, where the (020) crystal plane corresponds to the *ac* crystal plane. The larger the ratio of the diffraction peak area of the (020) crystal plane to the diffraction peak area of the (200) crystal plane of the cathode material, the better the cycling capability of the cathode material. By designing the structure of the cathode material, the ratio of the diffraction peak area of the (020) crystal plane to the diffraction peak area of the (200) crystal plane of the cathode material is regulated within an appropriate range in the disclosure, so that the crystal structure of the cathode material can grow along the specific *ac* crystal plane, and the cycling performance of the cathode material is significantly improved.

In a possible implementation, M includes at least two elements of Ti, V, Mg, Zr, Co, In, Ni, and Nb. M is selected from a variety of metals, which is beneficial to comprehensively improve the performance of the cathode material.

In a possible implementation, the at least two elements include at least one of Ti or Nb. The charge performance and discharge performance of the battery can be improved by doping Ti element into the cathode material. The structural stability of the cathode material can be improved by doping Nb element into the cathode material. In embodiments of the disclosure, M includes at least one of Ti or Nb, which can better improve the performance of the cathode material.

In a possible implementation, a molar ratio of Ti element and/or Nb element to M is (0.5 to 1):1. In embodiments of the disclosure, the proportion of Ti element and/or Nb element in M element is relatively high, which is more beneficial to improve the charge performance, discharge performance and structural stability of the cathode material, so that the cathode material has more excellent performance.

In a possible implementation, the cathode material is obtained by doping element M at a Mn-site of lithium manganese iron phosphate. In the disclosure, element M is doped at the Mn-site, which is beneficial for the cathode material to grow preferentially along the *ac* plane better, so as to shorten the diffusion distance of the lithium ion to improve the cycling performance of the cathode material. In addition, element M is doped at the Mn-site, which can increase the molar ratio of Fe element to Mn element in the cathode material, so that the cathode material has higher cycling stability.

In a second aspect, the disclosure provides a preparation method for a cathode material, and the preparation method for the cathode material includes the following:
a lithium source, an iron source, and a manganese source are dissolved in a solvent to obtain a first slurry;
a phosphate source and a dopant are dissolved in a solvent to obtain a second slurry;
the second slurry and the first slurry are mixed to obtain a mixed slurry;
the mixed slurry is heated to obtain a precursor; and
the precursor is sintered and ground to obtain the cathode material.

In a possible implementation, the second slurry and the first slurry being mixed includes the following:
the second slurry is divided into *n* portions, and the *n* portions of the second slurry are added to the first slurry sequentially at intervals, where *n* is a positive integer greater than or equal to 2.

The preparation method for the cathode material provided in the disclosure is beneficial to prepare the cathode material LiₐFe_{b}Mn_{c}Mₓ(PO₄)_{d} with preferential crystal plane growth, thereby improving the cycling performance of the cathode material.

In a third aspect, the disclosure provides a cathode plate. The cathode plate includes the above-described cathode material, or includes the cathode material prepared by the above-described preparation method for the cathode material.

In a fourth aspect, the disclosure provides a secondary battery. The secondary battery includes an anode plate, a separator, and the above-described cathode plate.

### BRIEF DESCRIPTION OF THE DRAWINGS

To more clearly illustrate the technical solution in embodiments of the disclosure, the accompanying drawing in embodiments of the disclosure are described below.

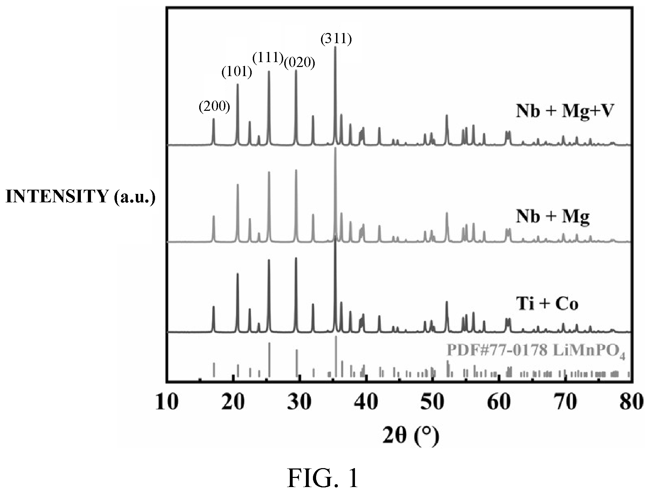

FIG. 1 is an X-ray diffraction (XRD) structural diagram of cathode materials with different dopants provided in an implementation of the disclosure.

### DETAILED DESCRIPTION

The technical solution in embodiments of the disclosure will be described below with reference to the accompanying drawing in embodiments of the disclosure. It is apparent that the described embodiments are only a part of the embodiments of the disclosure, rather than all of the embodiments.

The terms "first", "second" and the like are used for descriptive purposes only, and shall not be construed as indicating or implying relative importance or implicitly indicating the number of indicated technical features. Therefore, features defined with "first" and "second" may explicitly or implicitly include one or more of such features. In the description of the disclosure, unless otherwise specified, "multiple" means two or more.

In addition, directional terms such as "upper" and "lower" are defined with respect to the orientation of the schematic structures in the accompanying drawings. It should be understood that these directional terms are relative concepts, which are used for relative description and clarification, and may change accordingly with the change in the orientation where the structures are placed.

For ease of understanding, the English abbreviation and relevant technical term involved in embodiments of the disclosure are explained and described as follows.

XRD: the abbreviation for X-ray diffraction, namely X-ray diffraction.

In the prior art, lithium iron phosphate (LFP) and lithium manganese iron phosphate (LMFP) are usually selected as cathode materials. As a low-cost and high-safety material, the LFP with the olivine structure is regarded as one of the most competitive materials. However, with the increasing demand for longer driving range of electric vehicles, the operating voltage and the energy density of the LFP can no longer satisfy the requirements. The LMFP also has an olivine structure and is a solid solution cathode material formed by combining lithium manganese phosphate with high energy density and the characteristics of the LFP. However, the LMFP has problems of extremely low electronic conductivity and ionic conductivity in large-scale applications, and the dissolution of Mn during the charge process and the discharge process makes the LMFP difficult to improve the cycling capability.

A cathode material is provided in the disclosure. A general chemical formula of the cathode material is LiₐFe_{b}Mn_{c}Mₓ(PO₄)_{d}, where M includes at least one element of Ti, V, Mg, Zr, Co, In, Ni, or Nb, and 0.990≤a≤1.1, 0.9≤b+c≤1.1, 0.95≤d≤1.1, 0.001≤x≤0.03, 0.9≤b+c+x≤1.1. A crystal of the cathode material can grow preferentially along an *ac* crystal plane. A ratio of an *a*-direction size of the cathode material to a *b*-direction size of the cathode material is 0.4542 to 0.4756, and a ratio of a *c*-direction size of the cathode material to the *b*-direction size of the cathode material is 0.5869 to 0.6172.

In the disclosure, the cathode material is used for providing active lithium ions for a lithium-ion battery. The active lithium ions migrate between the cathode material and the anode of the battery, thereby realizing the charging and discharging of the battery. The general chemical formula of the cathode material is LiₐFe_{b}Mn_{c}Mₓ(PO₄)_{d}, where Li represents lithium element, Fe represents iron element, Mn represents manganese element, P represents phosphorus element, and O represents oxygen element.

M is selected from one or more of Ti, V, Mg, Zr, Co, In, Ni, and Nb. Exemplarily, in a case where M is selected from one element of Ti, V, Mg, Zr, Co, In, Ni, or Nb, the general chemical formula of the cathode material may be LiₐFe_{b}Mn_{c}Tiₓ(PO₄)_{d}, LiₐFe_{b}Mn_{c}Vₓ(PO₄)_{d}, LiₐFe_{b}Mn_{c}Mgₓ(PO₄)_{d}, LiₐFe_{b}Mn_{c}Zrₓ(PO₄)_{d}, LiₐFe_{b}Mn_{c}Coₓ(PO₄)_{d}, LiₐFe_{b}Mn_{c}Inₓ(PO₄)_{d}, LiₐFe_{b}Mn_{c}Niₓ(PO₄)_{d}, or LiₐFe_{b}Mn_{c}Nbₓ(PO₄)_{d}.

In a case where M is selected from multiple elements of Ti, V, Mg, Zr, Co, In, Ni, and Nb, the general chemical formula of the cathode material may be LiₐFe_{b}Mn_{c}Mₓ₁M'ₓ₂(PO₄)_{d}, where x1+x2=x. Alternatively, the general chemical formula of the cathode material may be LiₐFe_{b}Mn_{c}Mₓ₁M'ₓ₂M"ₓ₃(PO₄)_{d}, where x1+x2+x3=x.

In embodiments of the disclosure, by introducing element M into the cathode material, the cathode material can grow preferentially on the designated *ac* crystal plane, so as to shorten the size of the cathode material crystal along the *b*-direction. The *ac* plane is perpendicular to a lithium ion migration direction, and a *bc* plane and the *b*-direction are parallel to a lithium ion transport channel. Generally, the larger the doping amount of element M, the higher the concentration of breakable Li-O bonds, the shorter the *b*-axis length of the cathode material crystal, and the higher the cycling performance of the cathode material. If the doping amount of element M exceeds an upper limit, the electrochemical performance of the cathode material may be affected because of the generation of an impurity phase inside the cathode material crystal. In the disclosure, by controlling 0.001≤x≤0.03, element M is doped in an appropriate amount, which improves the cycling performance of the cathode material on the premise of ensuring that the cathode material has high electrochemical performance.

In the disclosure, the ratio of the *a*-direction size of the cathode material to the *b*-direction size of the cathode material is 0.4542 to 0.4756. A larger ratio of the *a*-direction size of the cathode material to the *b*-direction size of the cathode material indicates a smaller size of the cathode material along the *b*-direction. In this case, the cathode material grows preferentially along the *ac* plane, shortening the size of the cathode material along the *b*-direction, such that the lithium ion diffusion distance is shortened, so as to improve the cycling performance of the cathode material.

The ratio of the *c*-direction size of the cathode material to the *b*-direction size of the cathode material is 0.5869 to 0.6172. A larger ratio of the *c*-direction size of the cathode material to the *b*-direction size of the cathode material indicates a smaller size of the cathode material along the *b*-direction, which illustrates that the growth of the cathode material preferentially along the *ac* plane can shorten the size of the cathode material along the *b*-direction, and shorten the lithium ion diffusion distance, so as to improve the cycling performance of the cathode material.

In embodiments of the disclosure, by modifying the cathode material and controlling a coordination degree between a doping element and an anion, the cathode material can grow preferentially along the *ac* plane, which can shorten the lithium ion diffusion distance and facilitate lithium ion migration, thereby improving the ion transport rate and electron transport rate of the cathode material, and effectively enhancing the cycling performance of the cathode material.

In an implementation, the ratio of the *a*-direction size of the cathode material to the *b-*direction size of the cathode material is 0.4542, 0.4550, 0.4600, 0.4650, 0.4700, or 0.4756.

In an implementation, the ratio of the *c*-direction size of the cathode material to the *b-*direction size of the cathode material is 0.5869, 0.5900, 0.5950, 0.6000, 0.6100, or 0.6172.

In a possible implementation, a ratio of a diffraction peak area of a (020) crystal plane to a diffraction peak area of a (200) crystal plane of the cathode material is 3.011 to 3.500, where the (020) crystal plane corresponds to the *ac* crystal plane. The (020) crystal plane is perpendicular to the lithium ion migration direction. The (200) crystal plane corresponds to the *bc* plane, that is, the (200) crystal plane is parallel to the lithium ion transport channel. When the cathode material is characterized by XRD, in an XRD pattern of the cathode material, the ratio of the diffraction peak area corresponding to the (020) crystal plane to the diffraction peak area corresponding to the (200) crystal plane can be used for evaluating the intensity of preferential growth of the cathode material. The diffraction peak area corresponding to the (020) crystal plane may be denoted as A020, and the diffraction peak area corresponding to the (200) crystal plane may be denoted as A200. The magnitude of the A020/A200 ratio can be understood as the length of the *b*-axis in a unit cell parameter. The larger the A020/A200 ratio, the shorter the b-axis length, the smaller the lithium ion deintercalation resistance, and the better the cycling performance of the cathode material.

Reference is made to FIG. 1. FIG. 1 is an XRD structural diagram of cathode materials with different dopants provided in an implementation of the disclosure. Compared with LiₐFe_{b}Mn_{c}(PO₄)_{d}, the general chemical formula of the cathode material is LiₐFe_{b}Mn_{c}Mₓ(PO₄)_{d} in embodiments of the disclosure, and in a case where M is selected from Ti element and Co element, or M is selected from Nb element and Mg element, or M is selected from Nb element, Mg element and V element, the diffraction peak area of the (020) crystal plane of the cathode material increases, and the ratio of the diffraction peak area of the (020) crystal plane to the diffraction peak area of the (200) crystal plane increases.

In embodiments of the disclosure, the larger the ratio of the diffraction peak area of the (020) crystal plane to the diffraction peak area of the (200) crystal plane of the cathode material, the better the cathode material can grow preferentially along the *ac* plane, the shorter the lithium ion diffusion distance, and the better the cycling capability of the cathode material. In embodiments of the disclosure, by designing the structure of the cathode material and regulating the ratio of the diffraction peak area of the (020) crystal plane to the diffraction peak area of the (200) crystal plane of the cathode material within a range of 3.011 to 3.500, the crystal structure of the cathode material grows along the specific *ac* crystal plane, and the cycling performance of the cathode material is significantly improved.

In a possible implementation, the ratio of the diffraction peak area of the (020) crystal plane to the diffraction peak area of the (200) crystal plane of the cathode material is 3.011, 3.050, 3.100, 3.150, 3.200, 3.250, 3.300, 3.350, 3.400, 3.450, or 3.500.

In an implementation, M includes at least two elements of Ti, V, Mg, Zr, Co, In, Ni, and Nb. Exemplarily, in a case where M is selected from two elements of Ti, V, Mg, Zr, Co, In, Ni, and Nb, the general chemical formula of the cathode material may be: LiₐFe_{b}Mn_{c}Nbₓ₁Mgₓ₂(PO₄)_{d}, LiₐFe_{b}Mn_{c}Nbₓ₁Tiₓ₂(PO₄)_{d}, LiₐFe_{b}Mn_{c}Nbₓ₁Vₓ₂(PO₄)_{d}, LiₐFe_{b}Mn_{c}Nbₓ₁Coₓ₂(PO₄)_{d}, LiₐFe_{b}Mn_{c}Tiₓ₁Coₓ₂(PO₄)_{d}, LiₐFe_{b}Mn_{c}Tiₓ₁Niₓ₂(PO₄)_{d}, LiₐFe_{b}Mn_{c}Tiₓ₁Mgₓ₂(PO₄)_{d}, LiₐFe_{b}Mn_{c}Vₓ₁Mgₓ₂(PO₄)_{d}, or LiₐFe_{b}Mn_{c}Inₓ₁Coₓ₂(PO₄)_{d}.

In a case where M is selected from more than two elements of Ti, V, Mg, Zr, Co, In, Ni, and Nb, the general chemical formula of the cathode material may be: LiₐFe_{b}Mn_{c}Nbₓ₁Mgₓ₂Zrₓ₃(PO₄)_{d}, LiₐFe_{b}Mn_{c}Nbₓ₁Tiₓ₂Zrₓ₃(PO₄)_{d}, LiₐFe_{b}Mn_{c}Nbₓ₁Vₓ₂Niₓ₃(PO₄)_{d}, LiₐFe_{b}Mn_{c}Nbₓ₁Coₓ₂Niₓ₃(PO₄)_{d}, LiₐFe_{b}Mn_{c}Tiₓ₁Coₓ₂Vₓ₃(PO₄)_{d}, LiₐFe_{b}Mn_{c}Tiₓ₁Niₓ₂Vₓ₃(PO₄)_{d}, LiₐFe_{b}Mn_{c}Tiₓ₁Mgₓ₂Nbₓ₃(PO₄)_{d}, LiₐFe_{b}Mn_{c}Vₓ₁Mgₓ₂Nbₓ₃(PO₄)_{d}, or LiₐFe_{b}Mn_{c}Inₓ₁Coₓ₂Nbₓ₃Tiₓ₄(PO₄)_{d}.

In embodiments of the disclosure, M is selected from a variety of metals, which is beneficial to comprehensively improve the performance of the cathode material. Exemplarily, Ti element is beneficial to improve the charge performance and discharge performance of the battery, and Nb element is beneficial to improve the structural stability of the cathode material. In a case where M includes both Ti element and Nb element, not only the charge performance and discharge performance of the battery can be improved, but also the structural stability of the cathode material can be improved, so that the cathode material has more excellent performance.

In a possible implementation, the at least two elements include at least one of Ti or Nb. When Ti and/or Nb element is directionally doped at the Mn-site, since the ionic radius of Ti and the ionic radius of Nb are smaller than the ionic radius of Mn, the original MnO₆ octahedron undergoes lattice distortion and contraction, the Li-O bond becomes longer, the energy required for bond breaking decreases, and the resistance of lithium ion deintercalation from the crystal lattice decreases, thereby improving the ion transport rate and electron transport rate of the cathode material. In addition, the charge performance and discharge performance of the battery can be improved by doping Ti element into the cathode material, and the structural stability of the cathode material can be improved by doping Nb element into the cathode material. In embodiments of the disclosure, M includes at least one of Ti or Nb, which can better improve the performance of the cathode material.

In an implementation, M includes Ti element and at least one element of V, Mg, Zr, Co, In, or Ni. Exemplarily, M includes Ti element and Co element. The cathode material provided in embodiments of the disclosure has more excellent charge performance and discharge performance.

In an implementation, M includes Nb element and at least one element of V, Mg, Zr, Co, In, or Ni. Exemplarily, M includes Nb element and Mg element. The cathode material provided in embodiments of the disclosure has more stable structure.

In an implementation, M includes Nb element and Ti element. The cathode material provided in embodiments of the disclosure has more excellent charge performance and discharge performance and higher structural stability.

In an implementation, M includes Nb element, Ti element and at least one element of V, Mg, Zr, Co, In, or Ni. Exemplarily, M includes Nb element, Ti element and Mg element. The cathode material provided in embodiments of the disclosure has more excellent comprehensive performance.

In a possible implementation, a molar ratio of Ti element and/or Nb element to M is (0.5 to 1):1. When M is selected from Ti element and other non-Nb elements, the molar ratio of Ti element to M is (0.5 to 1):1. Exemplarily, when M is selected from Ti element and Co element, a ratio of an amount of substance of Ti element to a sum of amounts of substance of Ti element and Co element is (0.5 to 1):1.

Similarly, when M is selected from Nb element and other non-Ti elements, the molar ratio of Nb element to M is (0.5 to 1):1. Exemplarily, when M is selected from Nb element and Co element, a ratio of an amount of substance of Nb element to a sum of amounts of substance of Nb element and Co element is (0.5 to 1):1.

Similarly, when M is selected from Ti element, Nb element and other non-Ti elements, the molar ratio of Ti element and Nb element to M is (0.5 to 1):1. Exemplarily, when M is selected from Ti element, Nb element and Co element, a ratio of a sum of amounts of substance of Ti element and Nb element to a sum of amounts of substance of Ti element, Nb element and Co element is (0.5 to 1):1.

If the content of Ti and/or Nb element is too low, the effect of improving the charge performance, discharge performance and structural stability of the cathode material is not significant. In embodiments of the disclosure, a relatively high proportion of Ti element and/or Nb element in M element is more beneficial to improve the charge performance, discharge performance and structural stability of the cathode material, so that the cathode material has more excellent performance.

In an implementation, the molar ratio of Ti element and/or Nb element to M may be 0.5:1, 0.55:1, 0.6:1, 0.65:1, 0.7:1, 0.75:1, 0.8:1, 0.85:1, 0.9:1, 0.95:1, or 1:1.

In a possible implementation, the cathode material is obtained by doping M element at the Mn-site of the LMFP. In embodiments of the disclosure, M element replaces at least part of Mn element in the LMFP and is doped at the Mn-site of the LMFP. The doped M element occupies the Mn-site. The M element is doped at the Mn-site, and the oriented growth of the Mn-site dopant is controlled by controlling the coordination degree between doping elements and anions. It is beneficial for the cathode material to grow preferentially along the *ac* plane better, so as to shorten the lithium ion diffusion distance and improve the cycling performance of the cathode material. In addition, the molar ratio of Fe element to Mn element in the cathode material can be increased by doping M element at the Mn-site, so that the cathode material is closer to the characteristics of the LFP, and the cathode material has higher cycling stability.

In an implementation, in a case where Ti or Nb is doped into the Mn-site, the relative intensity of the (020) crystal plane increases, the value of A020/A200 becomes larger, the b-axis of the cathode material crystal is shortened, and the cycling performance of the cathode material is improved.

In other implementations, M element may also be doped at other positions. In an implementation, the interior or an outer surface of the cathode material further includes a conductive material. The conductive material may be a carbon material. The conductive material enhances the conductivity of the cathode material and accelerates electron transfer, reduces the polarization rate of the cathode material, and is beneficial to improv the rate performance and cycling performance of the cathode material.

Exemplarily, in an implementation, the conductive material is doped inside the LiₐFe_{b}Mn_{c}Mₓ(PO₄)_{d}.

In an implementation, the cathode material has a core-shell structure. An inner core of the cathode material is LiₐFe_{b}Mn_{c}Mₓ(PO₄)_{d}, and an outer shell of the cathode material is a coating layer consisting of the conductive material. The coating layer consisting of the conductive material is coated on an outer surface of the inner core LiₐFe_{b}Mn_{c}Mₓ(PO₄)_{d}. In an implementation, the conductive material is also doped into the inner core of the LiₐFe_{b}Mn_{c}Mₓ(PO₄)_{d}.

A preparation method for a cathode material is provided in the disclosure. The preparation method for the cathode material includes step S1, step S2, step S3, step S4, and step S5. The specific steps are as follows:
Step S1, a lithium source, an iron source, and a manganese source are dissolved in a solvent to obtain a first slurry;
Step S2, a phosphate source and a dopant are dissolved in a solvent to obtain a second slurry;
Step S3, the second slurry and the first slurry are mixed to obtain a mixed slurry;
Step S4, the mixed slurry is heated to obtain a precursor;
Step S5, the precursor is sintered and ground to obtain the cathode material.

In step S1 and step S2, the lithium source, the iron source, the manganese source, the phosphate source, and the dopant are raw materials for preparing LiₐFe_{b}Mn_{c}Mₓ(PO₄)_{d}. In the disclosure, the purities of the lithium source, the iron source, the manganese source, the phosphate source, and the dopant are all greater than or equal to 99%. The lithium source, the iron source, the manganese source, the phosphate source, and the dopant are weighed according to an ion molar ratio of Li ion: Fe ion: Mn ion: M ion: PO₄³⁻ = a: b: c: x: d. The lithium source, the iron source, and the manganese source are dispersed in the solvent to obtain the first slurry, so that the lithium source, the iron source, and the manganese source are mixed uniformly. The phosphate source and the dopant are dispersed in the solvent to obtain the second slurry, so that the phosphate source and the dopant are mixed uniformly. The solvent in step S1 and the solvent in step S2 may be the same or different, which may be one or more of deionized water, anhydrous ethanol, and industrial alcohol. In an implementation, after the lithium source, the iron source, and the manganese source are added to the solvent in step S1, a ball milling method may be used for uniform mixing. In an implementation, after the phosphate source and the dopant are added to the solution in step S2, a liquid-phase ball milling method may also be used for mixing. The liquid-phase ball milling method can make the raw materials mixed more uniformly.

In step S3, the first slurry and the second slurry are mixed to facilitate the subsequent preparation of the cathode material.

In step S4, the mixed slurry is heated to evaporate the solvent in the mixed slurry, so as to obtain a solid precursor for the subsequent sintering preparation of the cathode material.

In step S5, the precursor is sintered, that is, various raw materials of the cathode material are sintered, so that the cathode material with the general molecular formula LiₐFe_{b}Mn_{c}Mₓ(PO₄)_{d} can be formed.

In an implementation, step S5 includes two sintering processes. A first sintering includes the following: the precursor is heated to 300°C to 500°C at a heating rate of 1°C/min to 5°C/min, and the temperature is held for 4 hours to 6 hours. A second sintering includes the following: a product of the first sintering is heated to 650°C to 900°C at a heating rate of 1°C/min to 5°C/min, and the temperature is held for 8 hours to 12 hours. After being cooled to room temperature, an obtained sample is ground to obtain the Mn-site doped cathode material LiₐFe_{b}Mn_{c}Mₓ(PO₄)_{d} with preferential crystal plane growth.

In an implementation, when the cathode material is further coated with a carbon layer, step S4 includes the following: a carbon source is added to the mixed slurry and mixed uniformly. Then the mixed slurry is heated to obtain the precursor.

In an implementation, the mixing of the second slurry and the first slurry, that is, step S3 includes the following: the second slurry is divided into *n* portions, and the *n* portions of the second slurry are added to the first slurry sequentially at intervals, where *n* is a positive integer greater than or equal to 2. Exemplarily, *n* is 3, the second slurry may be divided into three equal portions, and the second slurry is added to the first slurry in three times with a certain interval, such as 2 hours. In embodiments of the disclosure, the addition of the second slurry to the first slurry in batches is beneficial to prepare the cathode material with preferential crystal plane growth. In particular, the more portions the second slurry is divided into, that is, the larger the value of *n*, the more complete the manganese (Mn) site substitution reaction, and the more significant the effect of the oriented growth of the cathode material along the *ac* plane.

The preparation method for the cathode material provided in the disclosure is beneficial to prepare the cathode material LiₐFe_{b}Mn_{c}Mₓ(PO₄)_{d} with preferential crystal plane growth, thereby improving the cycling performance of the cathode material.

In an implementation, the lithium source is one or more of lithium carbonate, lithium oxalate, and lithium acetate.

In an implementation, the phosphate source is one or more of phosphoric acid, ammonium phosphate, and ammonium dihydrogen phosphate.

In an implementation, the manganese source is one or more of manganese carbonate, manganese oxalate, and manganese acetate.

In an implementation, the iron source is one or more of ferrous oxalate, ferrous acetate, ferric phosphate, and ferric nitrate.

In an implementation, the dopant, that is, M source, is an oxide of the corresponding doping element. For example, in a case where V is doped, the dopant is vanadium oxide, and in a case where Ni is doped, the dopant is nickel oxide.

In an implementation, the carbon source is one or more of glucose, sucrose, citric acid, acetylene black, and polyethylene glycol.

A cathode plate is provided in the disclosure. The cathode plate includes the above-described cathode material, or includes the cathode material prepared by the above-described preparation method for the cathode material.

The disclosure provides a secondary battery. The secondary battery includes an anode plate, a separator, and the above-described cathode plate.

To illustrate the beneficial effects of the method of the disclosure, the following embodiments and comparative embodiments are also provided in the disclosure.

### Embodiment 1

A cathode material is provided in embodiment 1. A general chemical formula of the cathode material is LiFe_{0.6}Mn_{0.38}Ti_{0.02}PO₄/C, where a ratio of a diffraction peak area of a (020) crystal plane to a diffraction peak area of a (200) crystal plane of the cathode material LiFe_{0.6}Mn_{0.38}Ti_{0.02}PO₄ is 3.158, a ratio of an *a*-direction size to a *b*-direction size of the LiFe_{0.6}Mn_{0.38}Ti_{0.02}PO₄ is 0.4670, and a ratio of a *c*-direction size to the *b*-direction size of the LiFe_{0.6}Mn_{0.38}Ti_{0.02}PO₄ is 0.5889.

The preparation method for the cathode material provided in embodiment 1 is as follows:
Step 1, a lithium source, an iron source, a manganese source, a phosphate source, and a dopant are weighed according to an ion molar ratio of Li ion: Fe ion: Mn ion: M: PO₄³⁻ = 1: 0.6: 0.38: 0.02: 1. The lithium source, the iron source, and the manganese source are preferentially dissolved in a solvent, and ball milled for 3 hours for mixing and dispersion to obtain a first slurry.
Step 2, another solution system containing the phosphate source and the doping element is prepared, that is, a second slurry.
Step 3, the second slurry is evenly divided into three equal portions, and added to the first slurry in three times (with an interval of 2 hours each time).
Step 4, a carbon source is added to the mixed slurry after mixing, and the mixed slurry is heated (to 80°C) to evaporate the solvent to obtain a solid block precursor.
Step 5, the precursor is heated to 350°C at a rate of 3°C/min, held for 6 hours, heated to 720°C at a rate of 3°C/min, and held for 10 hours. After being cooled to room temperature, an obtained sample is ground to obtain the cathode material.

### Embodiment 2

A cathode material is provided in embodiment 2. The difference between the cathode material provided in embodiment 2 and the cathode material provided in embodiment 1 is that a general chemical formula of the cathode material provided in embodiment 2 is LiFe_{0.6}Mn_{0.38}Ti_{0.01}Co_{0.01}PO₄/C.

### Embodiment 3

A cathode material is provided in embodiment 3. The difference between the cathode material provided in embodiment 3 and the cathode material provided in embodiment 1 is that a general chemical formula of the cathode material provided in embodiment 3 is LiFe_{0.6}Mn_{0.38}Nb_{0.01}Mg_{0.01}PO₄/C.

### Embodiment 4

A cathode material is provided in embodiment 4. The difference between the cathode material provided in embodiment 4 and the cathode material provided in embodiment 1 is that a general chemical formula of the cathode material provided in embodiment 4 is LiFe_{0.6}Mn_{0.38}Nb_{0.005}Mg_{0.005}V_{0.01}PO₄/C.

### Embodiment 5

A cathode material is provided in embodiment 5. The difference between the cathode material provided in embodiment 5 and the cathode material provided in embodiment 1 is that a general chemical formula of the cathode material provided in embodiment 5 is LiFe_{0.6}Mn_{0.38}Mg_{0.01}V_{0.01}PO₄/C.

### Embodiment 6

A cathode material is provided in embodiment 6. The difference between the cathode material provided in embodiment 6 and the cathode material provided in embodiment 2 is that a general chemical formula of the cathode material provided in embodiment 6 is LiFe_{0.6}Mn_{0.38}Ti_{0.015}Co_{0.005}PO₄/C.

### Embodiment 7

A cathode material is provided in embodiment 7. The difference between the cathode material provided in embodiment 7 and the cathode material provided in embodiment 1 is that a ratio of the diffraction peak area of the (020) crystal plane to the diffraction peak area of the (200) crystal plane of the cathode material provided in embodiment 7 is 3.2321.

### Embodiment 8

A cathode material is provided in embodiment 8. The difference between the cathode material provided in embodiment 8 and the cathode material provided in embodiment 1 is that a ratio of the *a*-direction size to the *b*-direction size of the cathode material provided in embodiment 8 is 0.4694, and a ratio of the *c*-direction size to the *b*-direction size of the cathode material provided in embodiment 8 is 0.5997.

### Comparative Embodiment 1

A cathode material is provided in comparative embodiment 1. The difference between the cathode material provided in comparative embodiment 1 and the cathode material provided in embodiment 1 is that a general chemical formula of the cathode material provided in comparative embodiment 1 is LiFe_{0.5}Mn_{0.5}PO₄.

The preparation method for the cathode material provided in comparative embodiment 1 is as follows:
Step 1, a lithium source, an iron source, a manganese source, and a phosphate source are weighed according to an ion molar ratio of Li ion: Fe ion: Mn ion: PO₄³⁻= 1: 0.5: 0.5: 1. The lithium source, the iron source, and the manganese source are preferentially dissolved in a solvent, and ball milled for 3 hours for mixing and dispersion to obtain a first slurry.
Step 2, another solution system containing the phosphate source is prepared, that is, a second slurry.
Step 3, the second slurry is evenly divided into three equal parts, and added to the first solution in three times (with an interval of 2 hours each time).
Step 4, a carbon source is added to the mixed slurry after mixing, and the mixed slurry is heated (to 80°C) to evaporate the solvent to obtain a solid block precursor.
Step 5, the precursor is heated to 350°C at a rate of 3°C/min, held for 6 hours, heated to 720°C at a rate of 3°C/min, and held for 10 hours. After being cooled to room temperature, an obtained sample is ground to obtain the cathode material.

### Comparative Embodiment 2

The preparation method for the cathode material provided in comparative embodiment 2 is as follows:
Step 1, the lithium source, the iron source, the manganese source, the phosphate source, and the dopant are weighed according to an ion molar ratio of Li ion: Fe ion: Mn ion: M: PO₄³⁻ = 1: 0.6: 0.38: 0.02: 1 and dispersed in a solvent, and ball milled for 3 hours for mixing and dispersion to obtain a mixed slurry.
Step 2, the carbon source is added to the mixed slurry and mixed uniformly again, then the mixed slurry is heated to 80°C to evaporate the solvent to obtain a solid block precursor.
Step 3, the precursor is heated to 350°C at a rate of 3°C/min, held for 6 hours, heated to 720°C at a rate of 3°C/min, and held for 10 hours. After being cooled to room temperature, an obtained sample is ground to obtain the cathode material.

### Comparative Embodiment 3

The preparation method for the cathode material provided in Comparative Embodiment 3 is as follows:
Step 1, the lithium source, the iron source, the manganese source, the phosphate source, and the dopant are weighed according to an ion molar ratio of Li ion: Fe ion: Mn ion: M: PO43- = 1: 0.6: 0.38: 0.02: 1. The lithium source, the iron source, and the manganese source are preferentially dissolved in a solvent, and ball milled for 3 hours for mixing and dispersion to obtain a first slurry.
Step 2, another solution system containing the phosphate source and the doping element is prepared, that is, a second slurry.
Step 3, the second slurry is added to the first slurry at one time.
Step 4, the carbon source is added to the mixed slurry after mixing, and the mixed slurry is heated (to 80°C) to evaporate the solvent to obtain a solid block precursor.
Step 5, the precursor is heated to 350°C at a rate of 3°C/min, held for 6 hours, heated to 720°C at a rate of 3°C/min, and held for 10 hours; after being cooled to room temperature, an obtained sample is ground to obtain the cathode material.

The cathode materials provided in embodiment 1 to embodiment 8 and the cathode materials provided in comparative embodiment 1 to comparative embodiment 3 are respectively assembled into cathode plates and lithium-ion batteries according to the following method.

Cathode: the cathode material, polyvinylidene fluoride (PVDF), and Super P Li (SP-Li) are mixed, ball milled and stirred at a mass ratio of 80:8:12 to obtain a cathode slurry. The cathode slurry is coated on the surface of an aluminum foil. The aluminum foil is vacuum-dried at 110°C overnight and rolled to obtain a cathode plate.

Anode: graphite, carboxymethyl cellulose (CMC), SBR, and SP are mixed, ball milled and stirred at a mass ratio of 95.8:1.2:2:1 to obtain an anode slurry. The anode slurry is coated on the surface of a copper foil. The copper foil is vacuum-dried at 110°C overnight to obtain an anode plate.

Electrolyte: ethylene carbonate and ethyl methyl carbonate are mixed at a volume ratio of 3:7, and LiPF₆ is added to form an electrolyte. The concentration of LiPF₆ is 1 mol/L.

Separator: polypropylene microporous separator.

Lithium-ion battery assembly: a coin-type lithium-ion full battery is assembled in an inert atmosphere glove box according to the assembly sequence of graphite anode plate-separator-electrolyte-cathode plate.

The electrochemical performance of the lithium-ion batteries assembled in the above embodiments are respectively tested according to the performance tests illustrated in Table 1, and all tests are performed at a rate of 0.5C. The test results are illustrated in Table 1 below.

**Table 1 Performance test results**

| | Unit cell parameter ratio: a/b | Unit cell parameter ratio: c/b | A020/A200 | Capacity retention rate after 2000 cycles at 0.5C (%) |
|---|---|---|---|---|
| Embodiment 1 | 0.4670 | 0.5889 | 3.158 | 92.28 |
| Embodiment 2 | 0.4621 | 0.5899 | 3.2536 | 93.66 |
| Embodiment 3 | 0.4718 | 0.5896 | 3.3945 | 94.12 |
| Embodiment 4 | 0.4699 | 0.5901 | 3.441 | 94.23 |
| Embodiment 5 | 0.4750 | 0.5921 | 3.398 | 93.54 |
| Embodiment 6 | 0.4633 | 0.6048 | 3.4050 | 93.28 |
| Embodiment 7 | 0.4589 | 0.5924 | 3.2321 | 92.87 |
| Embodiment 8 | 0.4694 | 0.599 | 3.2594 | 94.37 |
| Comparative Embodiment 1 | 0.4201 | 0.5322 | 2.6570 | 75.68 |
| Comparative Embodiment 2 | 0.4278 | 0.5296 | 2.8512 | 76.23 |
| Comparative Embodiment 3 | 0.4243 | 0.5199 | 2.5941 | 75.01 |

In the table 1, a/b represents the ratio of the *a*-direction size to the *b*-direction size of the cathode material, and c/b represents the ratio of the *c*-direction size to the *b*-direction size of the cathode material.

It can be seen from the test results of embodiment 1 to embodiment 8 and comparative embodiment 1 in table 1 that, a/b of the cathode materials provided in embodiments of the disclosure is within a range of 0.4542 to 0.4756, and c/b of the cathode materials provided in embodiments of the disclosure is within a range of 0.5869 to 0.6172. Additionally, a/b of the cathode materials provided in embodiments of the disclosure are larger than a/b in comparative embodiment 1, and c/b of the cathode materials provided in embodiments of the disclosure are larger than c/b in comparative embodiment 1, which indicates that the cathode material in the disclosure grows preferentially along the *ac* plane, thereby shortening the relative size in the *b*-direction. The A020/A200 ratio in embodiments of the disclosure is within a range of 3.011 to 3.500, and all are larger than the A020/A200 ratio in comparative embodiment 1, which indicates that the crystal structure of the cathode material in the disclosure grows along the specific *ac* crystal plane, and the cycling performance of the cathode material is significantly improved.

It can be seen from embodiment 1 and embodiment 2 that, compared with a case where M is selected from Mn and Ti, when M is selected from Mn, Ti and Co, the value of a/b decreases, the value of c/b increases, and the value of A020/A200 increases. The cathode material provided in embodiment 2 has a higher capacity retention rate, which indicates that selecting different M elements for doping can regulate the size of the cathode material to obtain a cathode material with more excellent performance.

It can be seen from embodiment 1 and embodiment 3 that, compared with the case where M is selected from Mn and Ti, when M is selected from Mn, Nb and Mg, the value of a/b of the cathode material increases, the value of c/b increases, and the value of A020/A200 increases, and the capacity retention rate is significantly improved.

It can be seen from embodiment 1 and embodiment 4 that, compared with the case where M is selected from Mn and Ti, when M is selected from Mn, Nb, Mg and V, the value of a/b of the cathode material increases, the value of c/b increases, and the value of A020/A200 increases, and the capacity retention rate is significantly improved. This indicates that regulating different elements for doping can regulate the size of the cathode material to obtain a cathode material with more excellent performance.

It can be seen from embodiment 1 and embodiment 5 that, compared with the case where M is selected from Mn and Ti, when M is selected from Mn, Mg and V, the value of a/b of the cathode material increases, the value of c/b increases, and the value of A020/A200 increases, and the capacity retention rate is significantly improved. This indicates that regulating different elements for doping can regulate the size of the cathode material to obtain a cathode material with more excellent performance.

It can be seen from embodiment 1 and embodiment 6 that, compared with the case where M is selected from Mn and Ti, when M is selected from Mn, Ti and Co, the value of a/b of the cathode material decreases, the value of c/b increases, and the value of A020/A200 increases, and the capacity retention rate is significantly improved. This indicates that regulating different elements for doping can regulate the size of the cathode material to obtain a cathode material with more excellent performance.

It can be seen from embodiment 1 and embodiment 7 that, under the same conditions, increasing the value of A020/A200 can increase the capacity retention rate of the cathode material.

It can be seen from embodiment 1 and embodiment 8 that, under the same conditions, increasing the ratio of a/b and increasing the ratio of c/b can increase the capacity retention rate of the cathode material.

It can be seen from embodiment 1 and comparative embodiment 2 that, during the preparation process of the cathode material, the cathode material obtained by comparative embodiment 2 by directly mixing all raw materials, evaporating the solvent and sintering has smaller values of a/b, c/b and A020/A200, and the capacity retention rate is significantly lower. In embodiment 1 of the disclosure, by optimizing the preparation steps and strictly controlling the addition sequence of various raw materials, the crystal of the cathode material grows preferentially along the *ac* plane, and a cathode material with higher capacity retention rate and more excellent performance is obtained.

It can be seen from embodiment 1 and comparative embodiment 3 that, during the preparation process of the cathode material, the cathode material obtained by adding the second slurry to the first slurry at one time in comparative embodiment 3 has smaller values of a/b, c/b and A020/A200, and the capacity retention rate is significantly lower. In embodiment 1 of the disclosure, the second slurry is added to the first slurry in batches, which makes the manganese (Mn) site substitution reaction more complete, the effect of the oriented growth of the cathode material along the *ac* plane is significant, and the cathode material has higher capacity retention rate and more excellent performance.

The cathode material, the preparation method and the application thereof provided in embodiments of the disclosure are described in detail above. Specific examples are used herein to illustrate the principle and embodiments of the disclosure. The description of the above embodiments is only used to help understand the method and the core idea of the disclosure. Meanwhile, for those skilled in the art, according to the idea of the disclosure, there will be changes in the specific embodiments and application scope. In summary, the content of this specification should not be construed as limiting the disclosure.

## Claims

1. A cathode material, wherein a general chemical formula of the cathode material is LiₐFe_{b}Mn_{c}Mₓ(PO₄)_{d}, M comprises at least one element of Ti, V, Mg, Zr, Co, In, Ni, or Nb, and 0.990 ≤a≤1.1, 0.9≤b+c≤1.1, 0.95≤d≤1.1, 0.001≤x≤0.03, 0.9≤b+c+x≤1.1; and
a crystal of the cathode material is able to grow preferentially along an *ac* crystal plane, a ratio of an *a*-direction size of the cathode material to a *b*-direction size of the cathode material is 0.4542 to 0.4756, and a ratio of a *c*-direction size of the cathode material to the *b*-direction size of the cathode material is 0.5869 to 0.6172.

2. The cathode material of claim 1, wherein a ratio of a diffraction peak area of a (020) crystal plane to a diffraction peak area of a (200) crystal plane of the cathode material is 3.011 to 3.500, and the (020) crystal plane corresponds to the *ac* crystal plane.

3. The cathode material of claim 1, wherein the M comprises at least two elements of Ti, V, Mg, Zr, Co, In, Ni, and Nb.

4. The cathode material of claim 3, wherein the M comprises Ti element, and the M further comprises at least one element of V, Mg, Zr, Co, In, or Ni.

5. The cathode material of claim 3, wherein the M comprises Nb element, and the M further comprises at least one element of V, Mg, Zr, Co, In, or Ni.

6. The cathode material of claim 3, wherein the at least two elements comprise at least one element of Ti or Nb.

7. The cathode material of claim 3, wherein the M comprises Nb element and Ti element, and the M further comprises at least one element of V, Mg, Zr, Co, In, or Ni.

8. The cathode material of claim 1, wherein a molar ratio of Ti element and/or Nb element to the M is (0.5 to 1):1.

9. The cathode material of claim 1, wherein the cathode material is obtained by doping the M element at a Mn-site of lithium manganese iron phosphate.

10. The cathode material of claim 1, wherein the cathode material further comprises a conductive material internally or on an outer surface of the cathode material.

11. The cathode material of claim 10, wherein the cathode material has a core-shell structure, an inner core of the cathode material is the LiₐFe_{b}Mn_{c}Mₓ(PO₄)_{d}, an outer shell of the cathode material is a coating layer of the conductive material, and the coating layer of the conductive material is coated on an outer surface of the inner core LiₐFe_{b}Mn_{c}Mₓ(PO₄)_{d}.

12. The cathode material of claim 10, wherein the conductive material is a carbon material.

13. A preparation method for a cathode material, wherein the preparation method for the cathode material comprises:
dissolving a lithium source, an iron source, and a manganese source in a solvent to obtain a first slurry;
dissolving a phosphate source and a dopant in a solvent to obtain a second slurry;
mixing the second slurry and the first slurry to obtain a mixed slurry;
heating the mixed slurry to obtain a precursor; and
sintering and grinding the precursor to obtain the cathode material.

14. The preparation method for the cathode material of claim 13, wherein mixing the second slurry and the first slurry comprises:
dividing the second slurry into *n* portions and adding the *n* portions of the second slurry to the first slurry sequentially at intervals, *n* being a positive integer greater than or equal to 2.

15. The preparation method for the cathode material of claim 13, wherein sintering the precursor comprises two sintering processes, and temperatures of the two sintering processes are different.

16. The preparation method for the cathode material of claim 15, wherein a first sintering comprises:
heating the precursor to 300°C to 500°C at a heating rate of 1°C/min to 5°C/min, and holding the temperature for 4 hours to 6 hours.

17. The preparation method for the cathode material of claim 16, wherein a second sintering comprises:
heating a product of the first sintering to 650°C to 900°C at a heating rate of 1°C/min to 5°C/min, and holding the temperature for 8 hours to 12 hours.

18. The preparation method for the cathode material of claim 13, wherein the cathode material is further coated with a carbon layer, and heating the mixed slurry comprises:
adding a carbon source to the mixed slurry, and heating after mixing uniformly to obtain the precursor, wherein the carbon source is one or more of glucose, sucrose, citric acid, acetylene black, and polyethylene glycol.

19. A cathode plate, comprising the cathode material of any one of claims 1 to 12, or the cathode material prepared by the preparation method for the cathode material of any one of claims 13 to 18.

20. A secondary battery, comprising an anode plate, a separator, and the cathode plate of claim 19.
